# EUROPÄISCHE PATENTSCHRIFT

(11) **EP 4 448 976 B1**
(45) Veröffentlichungstag und Bekanntmachung des Hinweises auf die Patenterteilung: **25.03.2026**
(21) Anmeldenummer: 22812417.8
(22) Anmeldetag: 14.11.2022
(51) Int. Cl.: F16C 33/78

(54) **DICHTUNG FÜR RADLAGER**
SEAL FOR A WHEEL BEARING
JOINT D'ETANCHEITE POUR UN ROULEMENT DE ROUE

(30) Priorität: 15.12.2021 DE 102021133168
(43) Veröffentlichungstag der Anmeldung: 23.10.2024
(73) Patentinhaber: Schaeffler Technologies AG & Co. KG, 91074 Herzogenaurach (DE)
(72) Erfinder: SCHÄFER, Marc-André, 97532 Üchtelhausen (DE); BAERENSTECHER, Paul, 97424 Schweinfurt (DE); BARTHEL, Bernd, 97508 Grettstadt (DE); MIHM, Jan-Hinrich, 97074 Würzburg (DE)
(74) Vertreter: Schaeffler Technologies
(86) Internationale Anmeldenummer: PCT/DE2022/100846
(87) Internationale Veröffentlichungsnummer: WO 2023/110003

(56) Entgegenhaltungen:
- WO-A1-2015/064400
- WO-A1-2018/110626
- DE-T5- 112016 004 199
- JP-A- 2017 223 257

## Beschreibung

Die vorliegende Erfindung betrifft eine Dichtung zur Abdichtung eines Radlagers für ein Kraftfahrzeug, insbesondere für einen PKW und/oder einen LKW.

### Stand der Technik

Dichtungen zur Abdichtung eines Radlagers sind im Stand der Technik hinreichend bekannt. So werden bspw. sogenannte Kassettendichtungen zur Abdichtung von Radlagern bei PKWs oder LKWs eingesetzt. Die Dichtungen dienen dazu, einen Wälzkörperraum des Radlagers gegen von außen eintretende Fremdstoffe, wie Wasser, Schmutzpartikel etc., zu schützen. Die Dichtungen sind dabei meist als zweiteilige Baugruppen ausgebildet, wobei eine erste Baugruppe als ein Blechring ausgebildet ist, und mit einem feststehenden Element des Radlagers, bspw. mit dem Innenring des Radlagers verbunden ist, und eine zweite Baugruppe als eine Dichtungsanordnung mit Dichtungslippen ausgebildet ist, und mit einem über das Radlager drehbar gelagerten Element, bspw. mit einer Radnabe, verbunden ist. Zumindest eine der Dichtungslippen ist mit dem Blechring dichtend in Kontakt.

Es hat sich nunmehr herausgestellt, dass ein weiterer Bedarf besteht, eine bekannte Dichtung zur Abdichtung eines Radlagers zu verbessern. Insbesondere besteht ein weiterer Bedarf, eine Dichtung zur Abdichtung eines Radlagers bereitzustellen, die ein Eindringen von Fremdstoffen in das Radlager erschwert oder gar verhindert, und einen reibungsreduzierten Betrieb ermöglicht. Eine gattungsgemäße Dichtung ist aus der DE 11 2016 004199 T5 bekannt geworden.

Vor diesem Hintergrund ist es eine Aufgabe der vorliegenden Erfindung, eine verbesserte Dichtung zur Abdichtung eines Radlagers für ein Kraftfahrzeug, insbesondere für einen PKW und/oder einen LKW bereitzustellen, die insbesondere ein Eindringen von Fremdstoffen, wie bspw. Wasser, Schmutzpartikel etc., zumindest erschwert oder verhindert, und einen reibungsreduzierten Betrieb ermöglicht.

### Offenbarung der Erfindung

Diese und andere Aufgaben, die beim Lesen der folgenden Beschreibung noch genannt werden oder vom Fachmann erkannt werden können, werden durch die Gegenstände der unabhängigen Ansprüche gelöst. Vorteilhafte Ausführungsformen und Weiterbildungen sind den Unteransprüchen und der nachfolgenden Beschreibung zu entnehmen.

Die erfindungsgemäße Dichtung zur Abdichtung eines Radlagers für ein Fahrzeug, insbesondere für einen PKW oder einen LKW, weist ein Laufblech und eine Dichtungsanordnung auf. Das Laufblech ist dazu eingerichtet, drehfest mit einem radialinneren, insbesondere feststehenden Bauteil einer Radlagerung, wie bspw. einem Achszapfen oder einem Innenring des Radlagers, verbunden zu sein. Die Dichtungsanordnung ist dazu eingerichtet, drehfest mit einem radialäußeren, insbesondere drehbaren Bauteil der Radlagerung, wie bspw. einer Radnabe, verbunden zu sein. Die Dichtungsanordnung weist dabei ein Dichtungsblech und ein radial umlaufendes Dichtungselement mit wenigstens einer axialen Dichtungslippe auf, wobei das Dichtungselement an dem Dichtungsblech befestigt, z.B. aufvulkanisiert, ist, und sich die axiale Dichtungslippe im Wesentlichen axial in Richtung zum Laufblech hin erstreckt. Dabei bilden ein radialäußerer Endabschnitt des Dichtungsblechs und ein radialäußerer Endabschnitt des Laufblechs einen axialen Öffnungsspalt aus, der in eine Fangkammer mündet, wobei die Fangkammer als ein Zwischenraum zwischen dem Laufblech und der Dichtungsanordnung ausgebildet ist. Insbesondere ist die Fangkammer radial innen durch die axiale Dichtungslippe begrenzt. Dabei ist in axialer Richtung zwischen der axialen Dichtungslippe und dem Laufblech ein Spalt ausgebildet und das Laufblech weist einen Umleitungsabschnitt auf, der dazu eingerichtet ist, eindringende Fremdstoffe, wie bspw. Schmutz, Wasser etc., über den Spalt zwischen der axialen Dichtungslippe und dem Laufblech in die Fangkammer zu leiten bzw. zu heben. Ferner weist die Dichtungsanordnung einen Führungsabschnitt auf, der dazu eingerichtet ist, die Fremdstoffe durch eine Drehbewegung der Dichtung aus der Fangkammer heraus zu leiten.

Der Vorteil der erfindungsgemäßen Lösung liegt insbesondere darin, dass die axiale Dichtungslippe nicht an dem Laufblech anliegt, wodurch in diesem Bereich der Dichtung keine Reibung entsteht. Darüber hinaus wird durch den Umleitungsabschnitt sichergestellt, dass Fremdstoffe, wie Wasser, Schmutz etc., die über den Öffnungsspalt in die Dichtung gelangen, über den Spalt zwischen der axialen Dichtungslippe und dem Laufblech in die Fangkammer geleitet wird, und somit ein weiteres Vordringen der Fremdstoffe weiter in die Dichtung verhindert. Dadurch kann die Reibung der Dichtung im Betrieb reduziert werden, wobei weiterhin die Dichtigkeit, also die Dichtungsfunktion, der Dichtung gewährleistet ist.

Die Fangkammer ist derart gestaltet, dass Zentrifugalkräfte, die durch die Drehbewegung der Dichtung, insbesondere der Dichtungsanordnung, erzeugt werden, die Fremdstoffe nach radial außen transportieren, wo sie auf den Führungsabschnitt treffen. Der Führungsabschnitt ist derart ausgebildet, dass die Fremdstoffe, die durch die Zentrifugalkräfte zum Führungsabschnitt transportiert werden, unter Einwirkung der Zentrifugalkräfte entlang des Führungsabschnitts zum Öffnungsspalt geleitet werden, über den die Fremdstoffe die Fangkammer wieder verlassen. Darüber hinaus ist der Öffnungsspalt insbesondere möglichst schmal ausgelegt, um ein Eindringen von Fremdstoffen in die Dichtung zu reduzieren, insbesondere möglichst zu minimieren. Ferner kann der Öffnungsspalt radiale Schleuderkanäle aufweisen, die ein Heraustransportieren der Fremdstoffe aus der Fangkammer unterstützen, insbesondere verbessern. Dazu können insbesondere an dem rotierenden Dichtungsblech eine Mehrzahl sich in axialer Richtung erstreckende Gummifortführungen ausgebildet sein, die sich insbesondere bis zur radialen äußeren Fläche des radialäußeren Endabschnitts erstrecken können.

Mit anderen Worten kann man sagen, dass die spezielle Anordnung des Öffnungsspalts, der Fangkammer, dem Umleitungsabschnitt und dem Führungsabschnitt ein Eindringen von Fremdstoffen, wie Wasser, Schmutz etc., in die Dichtung erschwert, und insbesondere ein tieferes Eindringen in die Dichtung verhindert. Man kann also sagen, dass diese spezielle Anordnung eine Art Labyrinthdichtung ausbildet, die dazu eingerichtet ist, ein Eindringen von Fremdstoffen in die Dichtung zu reduzieren, und die in die Dichtung eindringenden Fremdstoffe möglichst effizient und/oder reibungsarm aus der Dichtung heraus zu befördern.

Erfindungsgemäß ist der Umleitungsabschnitt derart schräg ausgebildet, dass eine gedachte Verlängerung des Umleitungsabschnitts einen Außendurchmesser der axial verlaufenden Dichtungslippe nicht schneidet, insbesondere radial außerhalb des Außendurchmesser der axial verlaufenden Dichtungslippe verläuft. Unter dem Begriff "schräg" ist hierbei insbesondere ein winkliger Verlauf relativ zur Haupterstreckungsrichtung des Laufblechs zu verstehen, insbesondere relativ zur radialen Richtung der Dichtung. So ermöglicht der Umleitungsabschnitt, dass die Fremdstoffe, die über den Öffnungsspalt in die Dichtung gelangen, in die Fangkammer umgeleitet werden. Dadurch ist es möglich, zwischen der axialen Dichtungslippe und dem Laufblech einen Spalt auszubilden, ohne die Dichtwirkung der Dichtung zu beeinträchtigen. Durch den Spalt zwischen der axialen Dichtungslippe und dem Laufblech, berührt die axiale Dichtungslippe das Laufblech nicht, ist also kontaktlos, und somit reibungsfrei.

Gemäß einer Ausführungsform weist der Umleitungsabschnitt im Längsschnitt gesehen eine geradlinige Kontur oder eine durch zumindest einen Radius gebildete gekrümmte Kontur auf.

Darüber hinaus kann die Kontur des Umleitungsabschnitts im Längsschnitt aus mehreren Radien, insbesondere gemäß einer logarithmischen Funktion, ausgebildet sein. Die gedachte Verlängerung der gekrümmten Kontur ist hierbei vorzugsweise die gedachte Verlängerung eines der axialen Dichtungslippe zugewandten Endes des Umleitungsabschnitts.

Gemäß einer Ausführungsform ist der Führungsabschnitt, der insbesondere an einem radialäußeren Innendurchmesser der Dichtungsanordnung angeordnet ist, als eine Schräge ausgebildet, die zum Öffnungsspalt hin nach radial außen geneigt ist, und dazu eingerichtet ist, die Fremdstoffe zum Öffnungsspalt zu führen. Insbesondere kann der Führungsabschnitt aus dem Dichtungselement ausgebildet sein, das an dem Dichtungsblech befestigt ist. Die Neigung des Führungsabschnitts zum Öffnungsspalt hin ist dabei insbesondere so gewählt, dass die Fremdstoffe durch die aus der Drehbewegung der Dichtung resultierenden Zentrifugalkräfte entlang des Führungsabschnitts zum Öffnungsspalt transportiert werden.

Gemäß einer weiteren Ausführungsform ist die Schräge im Wesentlichen nicht-parallel zum Dichtungsblech ausgebildet. Gemäß einer Ausführungsform weist die Schräge eine Neigung von etwa 10° bis 40°, insbesondere von etwa 12° bis 25°, weiter insbesondere von etwa 15° bis 20°, zur Längsachse der Dichtung auf. Dies erlaubt eine im Wesentlichen von der Dichtungsblech-Neigung unabhängige Auslegung der Schräge.

Gemäß einer Ausführungsform ist der radialäußere Endabschnitt des Dichtungsblechs radial verlaufend und im Wesentlichen parallel zum radialäußeren Endabschnitt des Laufblechs angeordnet. Dadurch kann der Öffnungsspalt lang und schmal ausgebildet werden. Darüber hinaus dient der radialäußere Endabschnitt des Dichtungsblechs als ein Anschlag, der die Positionierung der Dichtungsanordnung, insbesondere in axialer Richtung, an dem radialäußeren Bauteil vereinfacht.

Gemäß einer alternativen Ausführungsform ist eine Stirnseite des radialäußeren Endabschnitts des Dichtungsblechs im Wesentlichen parallel zum radialäußeren Endabschnitt des Laufblechs angeordnet. Dadurch ist die Herstellung des Dichtungsblechs vereinfacht.

Gemäß einer Ausführungsform beträgt der Spalt zwischen der axialen Dichtungslippe und dem Laufblech bis 1 mm, insbesondere etwa 0,1 mm bis 0,5 mm. Insbesondere ist der Spalt zwischen der axialen Dichtungslippe und dem Laufblech groß genug, um eine Reibung zwischen der axialen Dichtungslippe und dem Laufblech zu reduzieren, insbesondere zu vermeiden, und klein genug, um ein mögliches Eindringen von Fremdstoffen, wie Wasser, Schmutz etc. zu erschweren.

Gemäß einer Ausführungsform erstreckt sich die Schräge des Führungsabschnitts im Wesentlichen bis zum radialäußeren Endabschnitt des Dichtungsblechs. Somit werden die Fremdstoffe durch die Zentrifugalkräfte entlang des Führungsabschnitts bis zum Öffnungsspalt hin geführt. Gemäß einer alternativen Ausführungsform weist die Dichtungsanordnung an dem radialäußeren Innendurchmesser, insbesondere im Bereich des radialäußeren Endabschnitts, ferner einen zylindrischen Sitz auf, wobei sich die Schräge des Führungsabschnitts im Wesentlichen bis zu dem zylindrischen Sitz erstreckt. Der zylindrische Sitz dient dazu, die Herstellung und/oder die Montage der Dichtungsanordnung zu vereinfachen.

Gemäß einer weiteren Ausführungsform kann die Dichtungsanordnung ferner zwei radiale Dichtungslippen aufweisen. Dabei ist eine erste der zwei radialen Dichtungslippen mit einem sich axial erstreckenden Montageabschnitt des Laufblechs dichtend in Kontakt, wobei die erste radiale Dichtungslippe und/oder der Montageabschnitt zumindest im Kontaktbereich ein reibungsreduzierendes Material aufweist, und eine zweite der zwei radialen Dichtungslippen ist derart radial außenliegend zu dem Montageabschnitt des Laufblechs angeordnet, dass ein radialer Spalt zwischen dem Montageabschnitt des Laufblechs und einem Innendurchmesser der zweiten radialen Dichtungslippe ausgebildet ist. Dadurch kann die Reibung im Betriebszustand der Dichtung erheblich reduziert werden, wobei die Dichtfunktion der Dichtung weiterhin gewährleistet ist.

Die zweite radiale Dichtungslippe, die auch als Fettlippe bezeichnet werden kann, berührt den Montageabschnitt nicht, wodurch ein Reibverlust aufgrund von Kontaktreibung verhindert wird. Der Abstand bzw. der Spalt zwischen der zweiten radialen Dichtungslippe und dem Montageabschnitt ist dabei insbesondere so gewählt, dass ein Eindringen von Fremdstoffen, insbesondere von Schmierfett, in die Dichtung erschwert ist, insbesondere sogar unterbunden werden kann. Darüber hinaus kann aufgrund des fehlenden Kontakts der Verschleiß der zweiten radialen Dichtungslippe reduziert werden, und somit die Lebensdauer der zweiten radialen Dichtungslippe verlängert werden.

Die erste radiale Dichtungslippe ist dazu eingerichtet, die Dichtfunktion der Dichtung zu gewährleisten, und ist daher dichtend mit dem Montageabschnitt des Laufblechs in Kontakt.

Das in dem Kontaktbereich der ersten radialen Dichtungslippe mit dem Montageabschnitt vorhandene reibungsreduzierende Material reduziert die im Betrieb durch den Kontakt erzeugte Reibung, ohne die Dichtfunktion der Dichtung zu beeinträchtigen. Aufgrund der reduzierten Reibung kann auch ein Verschleiß der ersten radialen Dichtungslippe reduziert und somit die Lebensdauer der ersten radialen Dichtungslippe verlängert werden.

Gemäß einer Ausführungsform weist die erste radiale Dichtungslippe ferner ein Federelement auf, das die erste radiale Dichtungslippe in Richtung zum Montageabschnitt des Laufblechs hin vorspannt. Dadurch kann die Dichtfunktion der Dichtung verbessert werden. Darüber hinaus kann so die Lebensdauer der Dichtung verlängert werden, da das Federelement die erste radiale Dichtungslippe stets in Kontakt mit dem Montageabschnitt hält, auch wenn die erste radiale Dichtungslippe bereits Verschleiß aufweist, der insbesondere durch die Kontaktreibung hervorgerufen werden kann.

Gemäß einer Ausführungsform weist die erste radiale Dichtungslippe ein Inlay auf, das aus dem reibungsreduzierenden Material, z.B. PTFE, hergestellt ist oder die erste radiale Dichtungslippe weist zumindest im Kontaktbereich mit dem Montageabschnitt eine Beschichtung aus dem reibungsreduzierten Material auf. Das Inlay ist derart in der ersten radialen Dichtungslippe aufgenommen, dass es mit dem Montageabschnitt dichtend in Kontakt ist. Dadurch ist die Reibung im Betriebszustand der Dichtung reduziert. Darüber hinaus kann so der Verschleiß der ersten radialen Dichtungslippe erheblich reduziert, insbesondere sogar verhindert, werden. Ferner kann das Inlay derart in der ersten radialen Dichtungslippe aufgenommen sein, dass es austauschbar ist. Dadurch ist es möglich, das Inlay als Verschleißteil auszutauschen und die Gesamtlebensdauer der Dichtung zu verlängern. Die Beschichtung der ersten radialen Dichtungslippe mit dem reibungsreduzierenden Material kann unkompliziert aufgetragen werden, und ist somit einfacher und/oder kostengünstiger herstellbar.

Gemäß einer Ausführungsform weist der Montageabschnitt zumindest im Kontaktbereich mit der ersten radialen Dichtungslippe eine Beschichtung aus dem reibungsreduzierenden Material, z.B. PTFE, auf. Die Beschichtung des Montageabschnitts mit dem reibungsreduzierenden Material kann zusätzlich oder alternativ zum Inlay bzw. der Beschichtung der ersten radialen Dichtungslippe vorgesehen sein. Durch die Beschichtung des Montageabschnitts mit dem reibungsreduzierenden Material kann die Reibung zwischen der ersten radialen Dichtungslippe und dem Montageabschnitt (weiter) reduziert werden, ohne dicht Dichtfunktion der Dichtung zu beeinträchtigen.

Gemäß einer Ausführungsform beträgt der radiale Spalt zwischen der zweiten radialen Dichtungslippe und dem Montageabschnitt bis 1 mm, insbesondere, 0,1 mm bis 0,5 mm. Dadurch ist der Spalt ausreichend groß, um die Reibung zwischen der zweiten radialen Dichtungslippe und dem Montageabschnitt zu reduzieren bzw. zu verhindern. Darüber hinaus ist der Spalt auch ausreichend schmal, um ein Eindringen von Fremdstoffen, insbesondere von Schmierfett aus dem Radlager, zu erschweren, insbesondere sogar zu verhindern.

Gemäß einer Ausführungsform ist die erste radiale Dichtungslippe näher zu einem im Wesentlichen radial verlaufenden Abschnitt des Laufblechs angeordnet als die zweite radiale Dichtungslippe. Dadurch kann die erste radiale Dichtungslippe Fremdstoffe, die durch den Spalt zwischen der zweiten radialen Dichtungslippe und dem Montageabschnitt in die Dichtung eingedrungen sind, von einem tieferen Eindringen in die Dichtung hindern. Darüber hinaus kann der dichtende Kontakt zwischen der ersten radialen Dichtungslippe und dem Montageabschnitt als eine Art Trennwand angesehen werden, die einen sogenannten Fettbereich der Dichtung von einem sogenannten Wasserbereich der Dichtung trennt. Unter dem Fettbereich ist der Bereich der Dichtung zu verstehen, der im Betriebszustand dem Radlager, insbesondere dem Lagerkörperraum zugewandt angeordnet ist und somit dazu eingerichtet ist, ein Schmierfett innerhalb des Lagers im Wesentlichen daran zu hindern, aus dem Lager auszutreten. Unter dem Wasserbereich ist der Bereich der Dichtung zu verstehen, der im Betriebszustand dem Radlager abgewandt angeordnet ist, und somit dazu eingerichtet ist, Fremdstoffe, wie Wasser oder Schmutz etc., von außen im Wesentlichen daran zu hindern, in das Lager einzudringen.

Gemäß einer Ausführungsform erstreckt sich der Montageabschnitt in der axialen Richtung zumindest bis auf Höhe der zweiten radialen Dichtungslippe. Ein solch verlängerter Montageabschnitt reduziert, insbesondere verhindert, dass Fremdstoffe, wie bspw. Wasser, Schmutz etc., über einen statischen Dichtsitz zum ersten Bauteil, bspw. dem Innenring des Radlagers, in das Radlager eindringen. Darüber hinaus kann der verlängerte Montageabschnitt während der Montage und/oder dem Transport verhindern, dass die erste radiale Dichtungslippe versehentlich von dem Montageabschnitt herunterrutscht.

Gemäß einer Ausführungsform ist der Montageabschnitt dazu eingerichtet, mittels Presspassung auf das radialinnere Bauteil montiert zu werden bzw. montierbar zu sein.

Dadurch ist die Montage der Dichtung, insbesondere des Laufblechs, auf das radialinnere Bauteil einfach und kostengünstig.

Gemäß einer Ausführungsform weist der Montageabschnitt auf einer Innenseite, also einer dem radialinneren Bauteil zugewandten Seite, eine Beschichtung auf, die einen statisch dichtenden Effekt aufweist. Dadurch kann die Dichtigkeit zwischen dem Laufblech und dem radialinneren Bauteil verbessert werden.

Ferner betrifft die Erfindung auch eine Radlagerung für ein Fahrzeug, wie ein PKW und/oder einen LKW, mit einem Achszapfen, einer Radnabe, und einem Radlager. Die Radnabe ist über das Radlager drehbar auf dem Achszapfen angeordnet. Ferner weist die Radlagerung eine erfindungsgemäße Dichtung auf, die zur Abdichtung des Radlagers, insbesondere auf einer Radinnenseite, angeordnet ist.

### Detailbeschreibung anhand Zeichnung

Weitere die Erfindung verbessernde Maßnahmen werden nachstehend gemeinsam mit der Beschreibung eines bevorzugten Ausführungsbeispiels der Erfindung anhand der Figur näher dargestellt. Es zeigt:

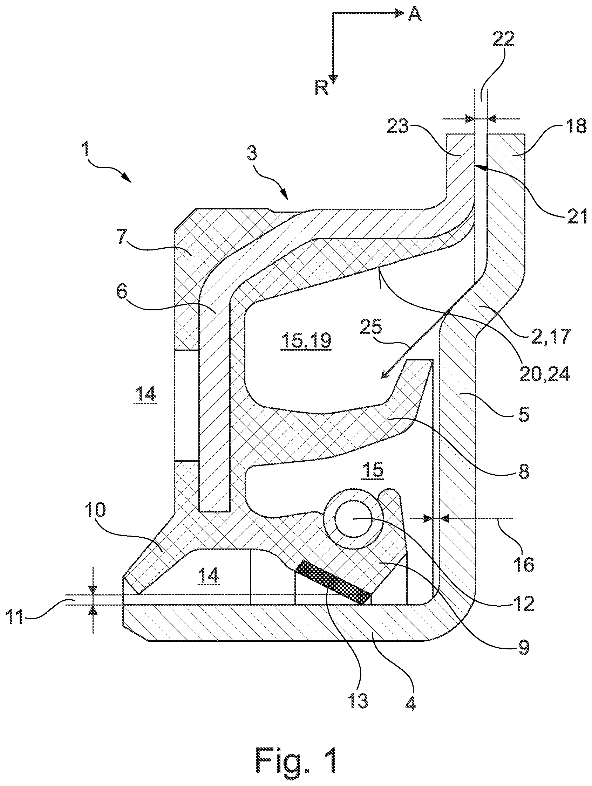

- Fig. 1: eine schematische Darstellung einer Dichtung gemäß einer Ausführungsform der Erfindung in einer Längsschnittdarstellung.

Die Figur ist lediglich schematischer Natur und dient nur dem Verständnis der Erfindung. Die gleichen Elemente sind mit denselben Bezugszeichen versehen.

Fig. 1 zeigt eine Dichtung 1 in einer schematischen Längsschnittdarstellung. Die Dichtung 1 weist ein Laufblech 2 und eine Dichtungsanordnung 3 auf. Das Laufblech 2 weist einen im Wesentlichen axialverlaufenden, hülsenartigen Montageabschnitt 4 und einen im Wesentlichen radialverlaufenden Dichtabschnitt 5 auf. Das Laufblech 2 ist dazu eingerichtet, mit dem Montageabschnitt 4 drehfest auf ein radialinneres Bauteil einer Radlagerung (nicht dargestellt) montiert zu werden. In der Regel ist das Laufblech 2 als ein statisches Bauteil ausgelegt, welches im Betriebszustand der Dichtung 1 nicht rotiert. Der Montageabschnitt 4 erstreckt sich im Wesentlichen über die gesamte axiale Länge der Dichtungsanordnung 3, wodurch die Montage und/oder der Transport der Dichtung 1 sowie eine statische Dichtheit zwischen der Dichtung 1 und dem radialinneren Bauteil der Radlagerung verbessert werden können.

Die Dichtungsanordnung 3 weist ein Dichtungsblech 6 und ein Dichtungselement 7 auf, das an dem Dichtungsblech 6 befestigt ist. Das Dichtungsblech 6 ist dazu eingerichtet, auf ein radialäußeres Bauteil der Radlagerung (nicht dargestellt) montiert zu werden. In der Regel ist die Dichtungsanordnung 3 als ein dynamisches Bauteil ausgelegt, welches im Betriebszustand der Dichtung 1 rotiert. Das Dichtungselement 7 weist eine axiale Dichtungslippe 8, eine erste radiale Dichtungslippe 9 sowie eine zweite radiale Dichtungslippe 10 auf.

Die erste radiale Dichtungslippe 9 erstreckt sich im Wesentlichen radial zum Montageabschnitt 4 des Laufblechs 2 hin und ist mit diesem dichtend in Kontakt. Die zweite radiale Dichtungslippe 10 erstreckt sich ebenfalls im Wesentlichen radial zum Montageabschnitt 4 des Laufblechs 2 hin, berührt den Montageabschnitt 4 jedoch nicht. Das bedeutet, dass zwischen der zweiten radialen Dichtungslippe 10 und dem Montageabschnitt 4 ein radialer Spalt 11 ausgebildet ist, der insbesondere eine Breite von etwa 0 mm bis etwa 1 mm, ferner insbesondere von etwa 0,1 mm bis etwa 0,5 mm aufweist. Im Betriebszustand der Dichtung 1 ist die zweite radiale Dichtungslippe 10 einem Lagerkörperraum des Radlagers (nicht dargestellt) zugewandt angeordnet, und dazu eingerichtet, ein Austreten von Schmierfett aus dem Lagerkörperraum zu reduzieren, insbesondere zu unterbinden. Daher kann die zweite radiale Dichtungslippe 10 auch als Fettlippe 10 bezeichnet werden.

Die erste radiale Dichtungslippe 9 ist mit dem Montageabschnitt 4 des Laufblechs 2 dichtend in Kontakt. In der hier gezeigten, beispielhaften Ausführungsform weist die erste radiale Dichtungslippe 9 ein umlaufenden Federelement 12 auf, das die erste radiale Dichtungslippe 9 in Richtung zum Montageabschnitt 4 hin vorspannt. Durch das Federelement 12 kann ein dichtender Kontakt auch bei einsetzendem Verschleiß der ersten radialen Dichtungslippe 9, insbesondere im Kontaktbereich mit dem Montageabschnitt 4, gewährleistet werden. Darüber hinaus weist die erste radiale Dichtungslippe 9 ein Inlay 13 auf, welches aus einem reibungsreduzierendem Material, wie bspw. PTFE, hergestellt ist. Das Inlay 13 ist derart in der ersten radialen Dichtungslippe 9 aufgenommen, dass das Inlay 13 den dichtenden Kontakt mit dem Montageabschnitt 4 ausbildet. Dadurch kann eine Reibung, die im Betriebszustand der Dichtung 1 durch eine Drehung der Dichtungsanordnung 3 relativ zum Laufblech 2 erzeugt wird, reduziert werden. Alternativ kann die erste radiale Dichtungslippe 9 statt des Inlay 13 mit einer Beschichtung aus einem reibungsreduzierenden Material, bspw. einer PTFE-Beschichtung, versehen sein. Zusätzlich, oder alternativ, kann der Montageabschnitt mit einer Beschichtung aus einem reibungsreduzierenden Materials, bspw. einer PTFE-Beschichtung, versehen sein.

Die erste radiale Dichtungslippe 9 dient dazu einen Fettbereich 14 der Dichtung 1 von einem Wasserbereich 15 der Dichtung 1 zu trennen. Der Fettbereich 14 ist ein Bereich, der im Betriebszustand der Dichtung 1 dem Radlager (nicht dargestellt) zugewandt angeordnet ist, und dazu eingerichtet ist, zum einen das Schmierfett innerhalb des Radlagers im Wesentlichen daran zu hindern aus dem Lager auszutreten, und zum anderen ein Dichtungsfett aufzunehmen, das dazu eingerichtet ist, die Lebensdauer der Dichtung zu verlängern. Mit anderen Worten kann man sagen, dass der Fettbereich 14, der in axialer Richtung A auf der einen Seite durch die erste radiale Dichtungslippe 9 und in axialer Richtung A auf der anderen Seite durch die zweite radiale Dichtung 10 begrenzt wird, im Wesentlichen zur Aufnahme des Dichtungsfetts dient. Der Wasserbereich 15 in ein Bereich, der im Betriebszustand der Dichtung 1, dem Radlager (nicht dargestellt) abgewandt angeordnet ist, und dazu eingerichtet ist, Wasser und andere Fremdstoffe, wie bspw. Schmutz, die in die Dichtung 1 eindringen, abzufangen und wieder nach draußen zu befördern, wie nachfolgend noch genauer erläutert wird.

Die axiale Dichtungslippe 8 ist in radialer Richtung gesehen im Wesentlichen außerhalb der ersten radialen Dichtungslippe 9 angeordnet und erstreckt sich im Wesentlichen axial in Richtung zum Laufblech 2, insbesondere zum Dichtabschnitt 5 des Laufblechs 2 hin, ohne den Dichtabschnitt 5 zu berühren. Somit ist ein axialer Spalt 16 zwischen der axialen Dichtungslippe 8 und dem Laufblech 2 ausgebildet. Das Laufblech 2 weist ferner einen Umleitungsabschnitt 17, und einen radialäußeren Endabschnitt 18 auf. Der Umleitungsabschnitt 17 ist radial außerhalb des Dichtabschnitts 5 angeordnet und erstreckt sich im Wesentlichen schräg bzw. winklig zum Dichtabschnitt 5 und in radialer Richtung R nach außen betrachtet von der Dichtungsanordnung 3 wegweisend, und geht in den radialäußeren Endabschnitt 18 über, der sich im Wesentlichen in radialer Richtung R nach außen erstreckt.

Die Dichtungsanordnung 3 und das Laufblech 2 bilden einen Zwischenraum 19 aus, der auch als Fangkammer 19 bezeichnet werden kann. Genauer gesagt wird die Fangkammer 19 durch einen Führungsabschnitt 20 der Dichtungsanordnung 3, der axialen Dichtungslippe 8 und dem Umleitungsabschnitt 17 gebildet. Darüber hinaus ist die Fangkammer 19 mit einem Öffnungsspalt 21 verbunden, der durch einen axialen Abstand 22 zwischen dem radialäußeren Endabschnitt 18 des Laufblechs 2 und einem radialäußeren Endabschnitt 23 der Dichtungsanordnung 3 ausgebildet ist.

Die Fangkammer 19 ist dazu eingerichtet, Fremdstoffe, wie bspw. Wasser, Schmutz etc., welche durch den Öffnungsspalt 21 in die Dichtung 1 eindringen, aufzufangen und über den Öffnungsspalt 21 wieder nach draußen zu transportieren. Hierzu ist der Umleitungsabschnitt 17 im Wesentlichen gegenüberliegend dem Öffnungsspalt 21 angeordnet, sodass Fremdstoffe, die durch den Öffnungsspalt 21 in die Dichtung 1 eindringen, auf den Umleitungsabschnitt 17 treffen. Der Umleitungsabschnitt 17 ist derart schräg bzw. gekrümmt ausgebildet, dass die eingedrungenen Fremdstoffe von dem Umleitungsabschnitt 17 entlang einer gedachten Verlängerung 25 über den Spalt 16 gehoben und in die Fangkammer 19 transportiert werden. Somit verhindert der Umleitungsabschnitt 17, dass Fremdstoffe über den axialen Spalt 16 zwischen der axialen Dichtungslippe 8 und dem Dichtabschnitt 5 weiter in die Dichtung 1 vordringen können, und ermöglicht einen reibungsreduzierten Betrieb der Dichtung 1. Ferner kann ein Durchmesserverhältnis zwischen einem ersten Durchmesser der axialen Dichtungslippe 8 und einem zweiten Durchmesser der axialen Dichtungslippe 8 definiert werden, wobei der zweite Durchmesser näher zum Dichtabschnitt 5 angeordnet und größer ist als der erste Durchmesser. Insbesondere kann das Durchmesserverhältnis 1: 1,06, insbesondere von 1:1,04 und weiter insbesondere von 1:1,02 betragen.

Im Betrieb der Dichtung 1 werden durch die Rotation der Dichtungsanordnung 3 relativ zum Leitblech 2 Zentrifugalkräfte erzeugt, die die Fremdstoffe in der Fangkammer 19, entlang der durch die Dichtungsanordnung 3 gebildeten Begrenzungswände zum Führungsabschnitt 20 befördern. Der Führungsabschnitt 20 ist als eine Schräge 24 ausgebildet, die in Richtung zum Öffnungsspalt 21 hin geneigt ist. Somit werden die Fremdstoffe unter der Einwirkung der Zentrifugalkräfte entlang des Führungsabschnitts 20 zum Öffnungsspalt 21 hin befördert, durch den sie, ebenfalls aufgrund der Zentrifugalkräfte, nach draußen transportiert werden.

### Bezugszeichenliste

- 1: Dichtung
- 2: Laufblech
- 3: Dichtungsanordnung
- 4: Montageabschnitt (Laufblech)
- 5: Dichtabschnitt (Laufblech)
- 6: Dichtungsblech
- 7: Dichtungselement
- 8: axiale Dichtungslippe
- 9: erste radiale Dichtungslippe
- 10: zweite radiale Dichtungslippe
- 11: radialer Spalt
- 12: Federelement
- 13: Inlay
- 14: Fettbereich
- 15: Wasserbereich
- 16: axialer Spalt
- 17: Umleitungsabschnitt
- 18: radialäußerer Endabschnitt (Laufblech)
- 19: Zwischenraum
- 20: Führungsabschnitt
- 21: Öffnungsspalt
- 22: axialer Abstand
- 23: radialäußerer Endabschnitt (Dichtungsblech)
- 24: Schräge
- 25: gedachte Verlängerung

- A: axiale Richtung
- R: radiale Richtung

## Patentansprüche

1. Dichtung (1) zur Abdichtung eines Radlagers für eine Radlagerung, aufweisend:
ein Laufblech (2), das dazu eingerichtet ist, drehfest mit einem radialinneren Bauteil der Radlagerung verbunden zu sein, und
eine Dichtungsanordnung (3), die dazu eingerichtet ist, drehfest mit einem radialäußeren Bauteil der Radlagerung verbunden zu sein, wobei die Dichtungsanordnung (3) ein Dichtungsblech (6) und ein radial umlaufendes Dichtungselement (7) mit wenigstens einer axialen Dichtungslippe (8) aufweist, wobei das Dichtungselement (7) an dem Dichtungsblech (6) befestigt ist, und sich die axiale Dichtungslippe (8) im Wesentlichen axial in Richtung zum Laufblech (2) hin erstreckt,
wobei ein radialäußerer Endabschnitt (23) des Dichtungsblechs (6) und ein radialäußerer Endabschnitt (18) des Laufblechs (2) einen axialen Öffnungsspalt (21) ausbilden, der in eine Fangkammer (19) mündet,
wobei die Fangkammer (19) als ein Zwischenraum zwischen dem Laufblech (2) und der Dichtungsanordnung (3) ausgebildet ist,
wobei in axialer Richtung (A) zwischen der axialen Dichtungslippe (8) und dem Laufblech (2) ein Spalt (16) ausgebildet ist, das Laufblech (2) einen Umleitungsabschnitt (17) aufweist, der dazu eingerichtet ist, eindringende Fremdstoffe über den Spalt (16) zwischen der axialen Dichtungslippe (8) und dem Laufblech (2) in die Fangkammer (19) zu leiten, und die Dichtungsanordnung (3) einen Führungsabschnitt (20) aufweist, der dazu eingerichtet ist, die Fremdstoffe durch eine Drehbewegung der Dichtung (1) aus der Fangkammer (19) zu leiten **dadurch gekennzeichnet, dass**
der Umleitungsabschnitt (17) derart schräg ausgebildet ist, dass eine gedachte Verlängerung (25) des Umleitungsabschnitts (17) am Übergang zum im Wesentlichen senkrecht verlaufenden Dichtabschnitt (5) einen Außendurchmesser der axial verlaufenden Dichtungslippe (8) nicht schneidet, insbesondere radial außerhalb des Außendurchmessers der axial verlaufenden Dichtungslippe (8) verläuft.

2. Dichtung (1) nach Anspruch 1, wobei der Umleitungsabschnitt (17) im Längsschnitt gesehen eine geradlinige Kontur oder eine durch zumindest einen Radius gebildete gekrümmte Kontur aufweist.

3. Dichtung (1) nach einem der Ansprüche 1 bis 2, wobei der Führungsabschnitt (20) als eine Schräge (24) ausgebildet ist, die zum Öffnungsspalt (21) hin nach radial außen geneigt ist, und dazu eingerichtet ist, die Fremdstoffe zum Öffnungsspalt (21) zu führen.

4. Dichtung (1) nach Anspruch 3, wobei die Schräge (24) im Wesentlichen nicht-parallel zum Umleitungsabschnitt (17) ausgebildet ist.

5. Dichtung (1) nach Anspruch 3 oder 4, wobei die Schräge (24) eine Neigung von etwa 10° bis 40°, insbesondere von etwa 12° bis 25°, weiter insbesondere von etwa 15° bis 20°, zur Rotationsachse der Dichtung (1) aufweist.

6. Dichtung (1) nach einem der Ansprüche 1 bis 5, wobei der radialäußere Endabschnitt (23) des Dichtungsblechs (6) radial verlaufend und im Wesentlichen parallel zum radialäußeren Endabschnitt (18) des Laufblechs (2) angeordnet ist.

7. Dichtung (1) nach einem der Ansprüche 1 bis 6, wobei der Spalt (16) zwischen der axialen Dichtungslippe (8) und dem Laufblech (2) bis 1 mm, insbesondere etwa 0,1 mm bis 0.5 mm beträgt.

8. Dichtung (1) nach einem der Ansprüche 3 bis 7, wobei sich die Schräge (24) im Wesentlichen bis zum radialäußeren Endabschnitt (23) des Dichtungsblechs (6) erstreckt, oder wobei die Dichtungsanordnung (3) an einem radialäußeren Innendurchmesser ferner einen zylindrischen Sitz aufweist und die Schräge (24) sich im Wesentlichen bis zu dem zylindrischen Sitz erstreckt.

9. Radlagerung für ein Fahrzeug, wie ein PKW und/oder einen LKW, aufweisend:
einen Achszapfen,
eine Radnabe,
ein Radlager,
wobei die Radnabe über das Radlager drehbar auf dem Achszapfen angeordnet ist, und
eine Dichtung (1) nach einem der vorhergehenden Ansprüche, die zur Abdichtung des Radlagers, insbesondere auf einer Radinnenseite, angeordnet ist.

## Claims

1. A seal (1) for sealing a wheel bearing for a wheel mounting, having:
a running plate (2) designed to be connected in a non-rotatable manner to a radially inner component of the wheel mounting, and
a seal arrangement (3) designed to be connected in a non-rotatable manner to a radially outer component of the wheel mounting, wherein the seal arrangement (3) has a sealing plate (6) and a radially circumferential sealing element (7) with at least one axial sealing lip (8), wherein the sealing element (7) is secured to the sealing plate (6), and the axial sealing lip (8) extends substantially axially in the direction of the running plate (2),
wherein a radially outer end section (23) of the sealing plate (6) and a radially outer end section (18) of the running plate (2) form an axial opening gap (21) that opens into a catch chamber (19),
wherein the catch chamber (19) is designed as an intermediate space between the running plate (2) and the seal arrangement (3),
wherein a gap (16) is formed in the axial direction (A) between the axial sealing lip (8) and the running plate (2), the running plate (2) has a diverting section (17) designed to guide penetrating foreign substances into the catch chamber (19) via the gap (16) between the axial sealing lip (8) and the running plate (2), and the seal arrangement (3) has a guide section (20) designed to guide the foreign substances out of the catch chamber (19) by means of a rotary movement of the seal (1), **characterised in that** the diverting section (17) is formed at an angle such that an imaginary extension (25) of the diverting section (17) at the transition to the substantially vertically extending sealing section (5) does not intersect an outer diameter of the axially extending sealing lip (8), in particular extends radially outside of the outer diameter of the axially extending sealing lip (8).

2. The seal (1) according to claim 1, wherein the diverting section (17) has a straight-line contour or a curved contour formed by at least one radius as viewed in a longitudinal section.

3. The seal (1) according to either one of claims 1 to 2, wherein the guide section (20) is designed as a slope (24) that is inclined radially outwards towards the opening gap (21) and is designed to guide the foreign substances to the opening gap (21).

4. The seal (1) according to claim 3, wherein the slope (24) is formed as substantially non-parallel to the diverting section (17).

5. The seal (1) according to claim 3 or 4, wherein the slope (24) has an inclination of about 10° to 40°, in particular of about 12° to 25°, further in particular of about 15° to 20°, with respect to the rotational axis of the seal (1).

6. The seal (1) according to any one of claims 1 to 5, wherein the radially outer end section (23) of the sealing plate (6) is arranged in a radially extending and in a substantially parallel manner with respect to the radially outer end section (18) of the running plate (2).

7. The seal (1) according to any one of the claims 1 to 6, wherein the gap (16) between the axial sealing lip (8) and the running plate (2) is up to 1 mm, in particular about 0.1 mm to 0.5 mm.

8. The seal (1) according to any one of claims 3 to 7, wherein the slope (24) extends substantially to the radially outer end section (23) of the sealing plate (6), or wherein the seal arrangement (3) further has a cylindrical seat at a radially outer inner diameter and the slope (24) extends substantially to the cylindrical seat.

9. A wheel mounting for a vehicle, such as a car and/or a truck, having:
an axle journal,
a wheel hub,
a wheel bearing,
wherein the wheel hub is rotatably arranged on the axle journal via the wheel bearing, and
a seal (1) according to any one of the preceding claims, which is arranged for sealing the wheel bearing, in particular on an inside of the wheel.

## Revendications

1. Joint d'étanchéité (1) pour l'étanchéité d'un roulement de roue pour un palier de roue, présentant :
une plaque de roulement (2) qui est conçue pour être reliée solidaire en rotation à un composant radialement interne du palier de roue, et
un agencement d'étanchéité (3) qui est conçu pour être relié solidaire en rotation à un composant radialement externe du palier de roue, dans lequel l'agencement d'étanchéité (3) présente une plaque d'étanchéité (6) et un élément d'étanchéité circonférentiel radial (7) présentant au moins une lèvre d'étanchéité axiale (8), dans lequel l'élément d'étanchéité (7) est fixé à la plaque d'étanchéité (6), et la lèvre d'étanchéité axiale (8) s'étend sensiblement axialement dans la direction de la plaque de roulement (2),
dans lequel une section d'extrémité radialement externe (23) de la plaque d'étanchéité (6) et une section d'extrémité radialement externe (18) de la plaque de roulement (2) forment une fente d'ouverture axiale (21) qui s'ouvre dans une chambre de collecte (19),
dans lequel la chambre de collecte (19) est formée comme un espace intermédiaire entre la plaque de roulement (2) et l'agencement d'étanchéité (3),
dans lequel une fente (16) est formée dans la direction axiale (A) entre la lèvre d'étanchéité axiale (8) et la plaque de roulement (2), la plaque de roulement (2) présente une section de déviation (17) qui est conçue pour diriger les corps étrangers pénétrants par l'intermédiaire de la fente (16) entre la lèvre d'étanchéité axiale (8) et la plaque de roulement (2) dans la chambre de collecte (19), et l'agencement d'étanchéité (3) présente une section de guidage (20) qui est conçue pour diriger les corps étrangers hors de la chambre de collecte (19) par un mouvement de rotation du joint d'étanchéité (1), **caractérisé en ce que** la section de déviation (17) est formée à un angle tel qu'une extension imaginaire (25) de la section de déviation (17) au niveau de la transition vers la section d'étanchéité (5) s'étendant sensiblement verticalement n'intersecte pas un diamètre externe de la lèvre d'étanchéité (8) s'étendant axialement, en particulier s'étend radialement en dehors du diamètre externe de la lèvre d'étanchéité (8) s'étendant axialement.

2. Joint d'étanchéité (1) selon la revendication 1, dans lequel la section de dérivation (17) présente un contour droit ou un contour courbe formé par au moins un rayon lorsqu'elle est vue en section longitudinale.

3. Joint d'étanchéité (1) selon l'une des revendications 1 à 2, dans lequel la section de guidage (20) est formée comme une pente (24), qui est inclinée radialement vers l'extérieur en direction de la fente d'ouverture (21) et qui est conçue pour guider les corps étrangers vers la fente d'ouverture (21).

4. Joint d'étanchéité (1) selon la revendication 3, dans lequel la pente (24) est formée sensiblement non parallèle à la section de déviation (17).

5. Joint d'étanchéité (1) selon la revendication 3 ou 4, dans lequel la pente (24) présente une inclinaison d'environ 10° à 40°, en particulier d'environ 12° à 25°, et plus particulièrement d'environ 15° à 20°, par rapport à l'axe de rotation du joint d'étanchéité (1).

6. Joint d'étanchéité (1) selon l'une des revendications 1 à 5, dans lequel la section d'extrémité radialement externe (23) de la plaque d'étanchéité (6) s'étend radialement et est agencée sensiblement parallèlement à la section d'extrémité radialement externe (18) de la plaque de roulement (2).

7. Joint d'étanchéité (1) selon l'une des revendications 1 à 6, dans lequel la fente (16) entre la lèvre d'étanchéité axiale (8) et la plaque de roulement (2) fait jusqu'à 1 mm, en particulier environ 0,1 mm à 0,5 mm.

8. Joint d'étanchéité (1) selon l'une des revendications 3 à 7, dans lequel la pente (24) s'étend sensiblement jusqu'à la section d'extrémité radialement externe (23) de la plaque d'étanchéité (6), ou dans lequel l'agencement d'étanchéité (3) présente en outre un siège cylindrique sur un diamètre interne radialement externe et la pente (24) s'étend sensiblement jusqu'au siège cylindrique.

9. Palier de roue pour un véhicule, tel qu'une voiture et/ou un camion, présentant :
une fusée d'essieu,
un moyeu de roue,
un roulement de roue,
dans lequel le moyeu de roue est agencé de manière rotative sur la fusée d'essieu par l'intermédiaire du roulement de roue,
et
un joint d'étanchéité (1) selon l'une quelconque des revendications précédentes, qui est agencé pour assurer l'étanchéité du roulement de roue, en particulier sur un côté intérieur de roue.
